Europäisches Patentamt

European Patent Office

Office européen des brevets

(19)

(11) Publication number: **0 146 763**
**A2**

(12) # EUROPEAN PATENT APPLICATION

(21) Application number: **84113783.9**

(22) Date of filing: **15.11.84**

(51) Int. Cl.⁴: **B 23 Q 7/00**

(30) Priority: **07.12.83 IT 2408883**

(43) Date of publication of application:
**03.07.85 Bulletin 85/27**

(84) Designated Contracting States:
**CH DE FR GB LI NL SE**

(71) Applicant: **ILLYCAFE' S.p.A.**
**110, Via Flavia**
**I-34147 Trieste(IT)**

(72) Inventor: **Illy, Ernesto**
**110, Via Flavia**
**I-34147 Trieste(IT)**

(74) Representative: **Ferraiolo, Ruggero**
**Viale Tunisia, 29**
**I-20124 Milano(IT)**

(54) **Handling system for workpieces to be operated in a machine.**

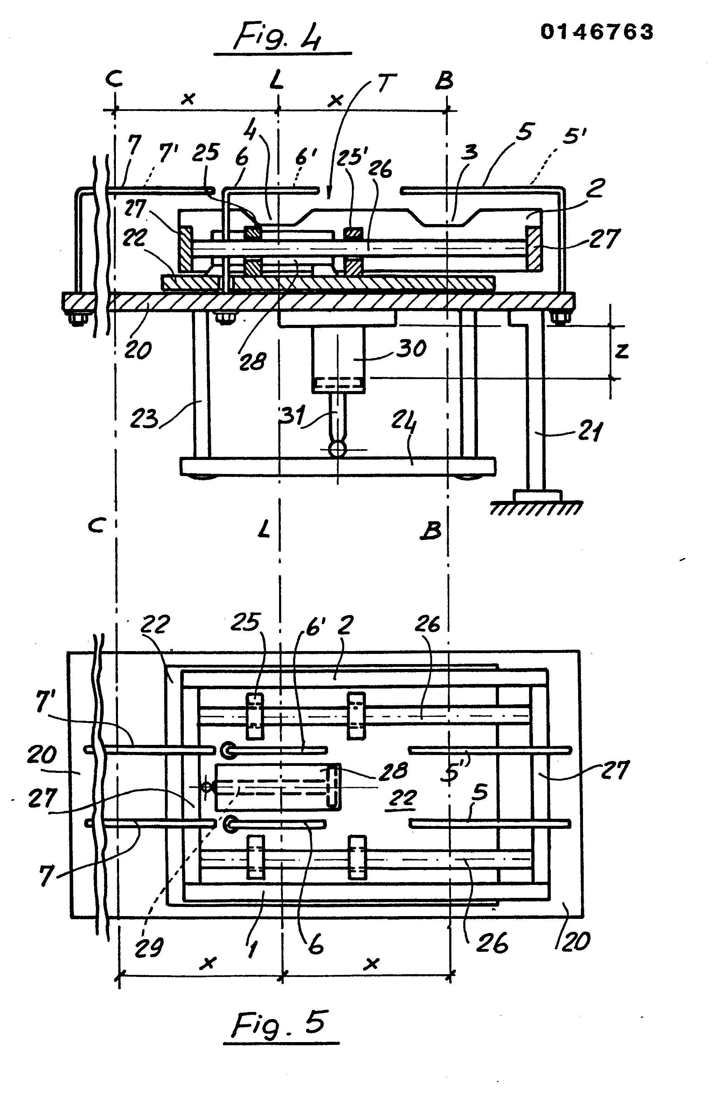

(57) Handling system for workpieces (O) to be operated in a machine (M) comprising a linear actuator (T) associated to supporting means (5,5'-6,6'-7,7') for the said workpieces (O) and to means (R) suitable for introducing and withdrawing a workpiece (O) into and from the machine (M) wherein the linear actuator (T) is provided with two seats (3,4) for receiving two workpieces, and with movements in relation to the above supporting means (5,5'-6,6'-7,7') and to the machine (M) so that the handling system simultaneously receives, in a station (ST/1), a first workpiece to be operated, moves a second workpiece to a station (ST/2) wherein said workpiece is introduced into and withdrawn from the machine (M) and moves an operated workpiece to a station (ST/3) from which the said workpieces is discharged (Figure 4 is referred to).

.../...

Fig. 4

- 1 -

## Handling system for workpieces to be operated in a machine

This invention concerns a handling system for workpieces to be operated in a machine. In our case handling system means an equipment or a part of one designed to pick up a piece from a quantity of such pieces which, one by one, must be machined in a machine, to carry each of said pieces to a position in front of the machine, to introduce it, withdraw it and remove it from the machine and finally to carry it to a station from which it is discharged. The term workpiece will be used for a piece to be operated in a machine and the term operated piece will be used for the same piece after it has been operated in the above machine.

The handling systems already known generally comprise a part for linear actuation, namely a linear actuator, that handles one piece at a time to carry out the movements listed above.

The chief drawback to handling systems in use is the slowness with which they operate, due to the dead times in the phases of idling movement of the linear actuator.

The handling system conforming to this present invention comprises a linear actuator having two seats for moving two pieces simultaneously, fixed supporting means for the pieces when they are disengaged from the linear actuator, a means designed to introduce a workpiece in a machine executing an operational sequence and withdraw the operated piece from said machine, said linear actuator being associated to movers which cause it to make lateral and transversal movements alternately in two directions perpendicular in relation to the said supporting means and to the machine, so that the linear actuator picks up from its own first seat a first workpiece placed on a first supporting means, carries the first workpiece in front of a machining station, disengages the first workpiece from its own first seat and places it on a second supporting means from which the first workpiece is introduced into and withdrawn from the machine, while a second workpiece arrives at the first supporting means, returns to an initial position in which its first seat lies directly below the second workpiece placed on the first supporting means and its second seat lies directly below the operated piece placed on the second supporting means, places the second workpiece on its own first seat and the operated piece on its own second seat, carries the second workpiece in front of the machining station, disengages the first operated piece from its own second seat and places it on a third supporting means from which it is discharged and disengages the second workpiece from its own first seat and places it on the second supporting means from which the second workpiece is introduced into and withdrawn from the machine, while a third workpiece reaches the first supporting means, returns to the initial position in which its own first seat·lies directly below the third workpiece placed on the first supporting means and its own second seat lies directly below the second operated piece placed on the second supporting means, repeats the sequence described above until the handling system is stopped by an operator or by a conventional device that stops the handling system when the last piece from a quantity of pieces has been operated and discharged from the handling system.

The advantage of the handling system conforming to this present invention is that dead times throughout the service sequence are minimal; some phases of the service sequence of the invented handling system are in fact executed simultaneously.

One way of actuating the invention is described below in detail making reference to the attached drawings showing a specific realization only, wherein:

Fig. 1 is a diagram of a number of operative phases,

Fig. 2 is a vertical cross-sectional view along the line X-X in Fig. 1, phase 1,

Fig. 3 is a diagram of the handling system associated to a machine,

Fig. 4 is a partly cut through side view of the handling system seen as indicated by the arrow F in Fig. 2,

Fig. 5 is a plan view of the handling system.

The handling system illustrated is associated to a machine for seaming a circular base onto a cylindrical container of white latten for foodstuffs. In this example, therefore, the workpiece is a cylindrical body; the circular container base is suitably positioned as required in the machine by an ordinary means extraneous to this invention.

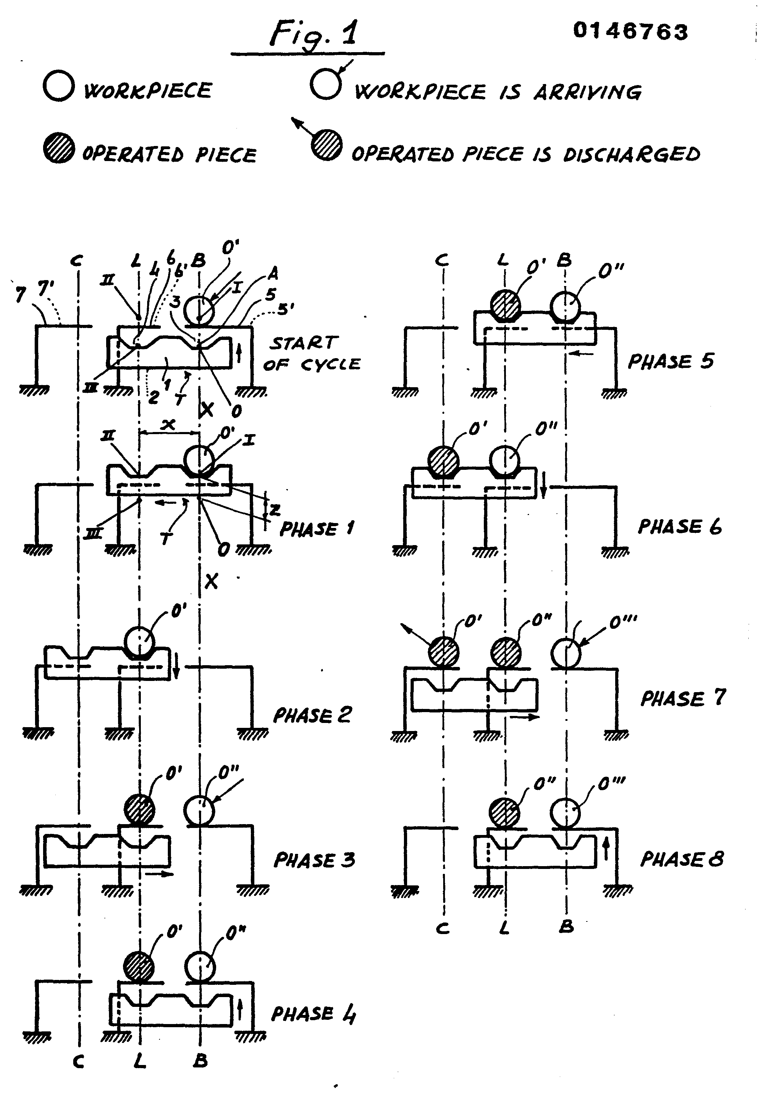

Fig. 1 shows: means 1 of a linear actuator T, while means 2 of the same linear actuator T, identical and parallel to means 1 situated behind the latter and so invisible in Fig. 1, is sufficiently spaced away from means 1 so that a workpiece can be received and held on the two saddles 3 or on the two saddles 4 formed in means 1 and 2; a linear actuator T associated to movers (not shown) for sequentially executing movements in the planes containing means 1 and 2 and, namely, referring for convenience to the central point A of saddle 3 and to the drawings - start of sequence and phase 1 - a vertical movement taking A from 0 to I, a horizontal movement taking A from I to II, a vertical movement taking A from II to III, a horizontal movement taking A from III to 0; three pairs of supporting means 5,5' - 6,6' - 7,7', able to receive and to sustain a piece, fixed in the handling system and so positioned as not to interfere with the movements of linear actuator T, means 5,5' lying directly above the saddle 3, when linear actuator T has point A in position I, means 6,6' lying directly above the saddle 4 when the linear actuator T has point A in position I and means 7,7' lying directly above saddle 4 when the linear actuator T has point A in position II.

The arrow marked against the linear actuator T in each drawing in Fig.1 indicates the direction of the next linear movement. Value z is conventionally assigned to vertical movements and value x to horizontal movements, as shown in Fig.1, phase 1.

Path z is that taken by means 1, 2 of the linear actuator T, in its upstroke, to raise saddles 3, 4 from a position below the supporting means 5,5' - 6,6' - 7,7' to a position above said supporting means and, in its downstroke, to lower saddles 3, 4 from the higher position to a lower position below said supporting means. Path x is equivalent to the distance between axes B-B and L-L and to the distance between axes L-L and C-C.

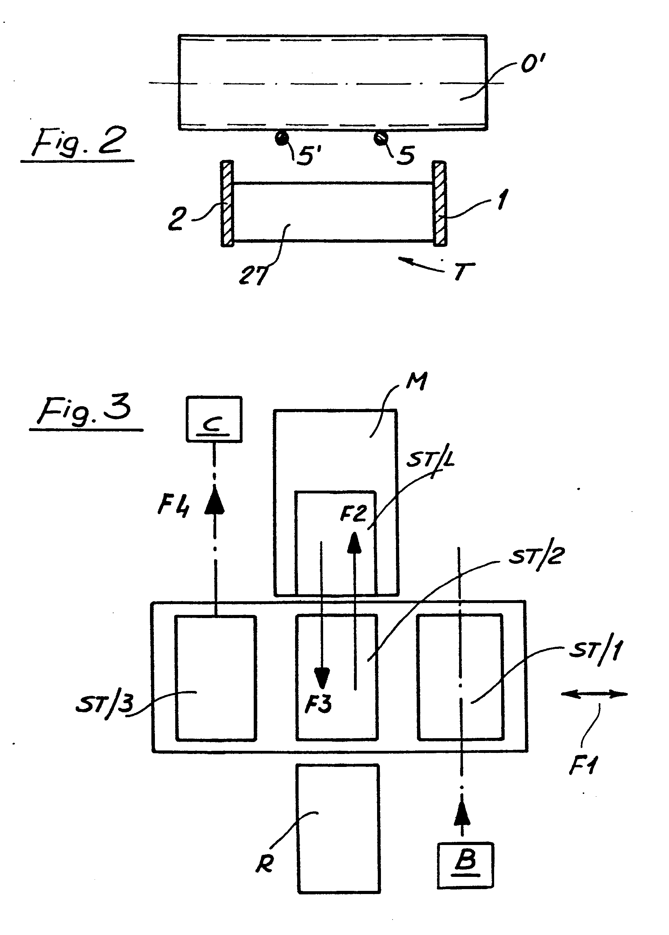

Although a study of the drawings in Fig.1 and in Fig.3 renders the mode of operating of the linear actuator and of the handling system comprehensible as a whole, below we are giving a brief description of each of the nine drawings in Fig. 1.

- "start of sequence": T is on the right low down and a first workpiece 0' arrives at 5,5',
- phase 1: T is raised and picks up 0' onto saddle 3,
- phase 2: T is moved to the left,
- phase 3: T is lowered, 0' is placed on 6,6' and is pushed into the machine, operated and returned to 6,6'; a second workpiece 0'' is brought to 5,5',
- phase 4: T is moved to the right,
- phase 5: T is raised and picks up 0' and 0'',
- phase 6: T is moved to the left and takes 0' over 7,7' and 0'' over 6,6',
- phase 7: T is lowered, 0' is placed on 7,7' and is then discharged, 0'' is placed on 6,6' and introduced into the machine, operated and returned to 6,6'; a third workpiece 0''' is brought to 5,5'
- phase 8: T is moved to the right, the handling system is once more in the position as for phase 4 and continues through the subsequent phases.

Fig.2 shows: a workpiece O' placed on the supporting means 5,5' and a joining bar 27 between means 1 and 2.

Fig.3 shows: a station ST/1 at which a workpiece arrives by force of gravity, as indicated by the arrow F1, and rests on the supporting means 5,5' (not shown) at the start of the sequence (see Fig.1); a station ST/2 to which the workpiece is brought by linear actuator T (not shown) and introduced into the machining station ST/L by a means R, as indicated by the arrow F2, and then withdrawn from said machining station by means R, as indicated by arrow F3, after being operated by the machine M; a station ST/3 to which the operated piece is taken by linear actuator T and discharged from the handling system by gravity as indicated by arrow F4. Lines B-B, L-L, C-C of Fig. 3 correspond to lines B-B, L-L, C-C of Fig. 1. Each of these lines corresponds to the longitudinal axis of one of the above stations. The means R comprises a conventional thrust device that presses a workpiece to introduce it into machining station ST/L and position it suitably in the machine M, and comprises a conventional gripping device which takes hold of an operated piece withdrawing it from the machining station and placing it on the supporting means 6,6'.

Figs 4 and 5 essentially show the linear actuator T associated to other parts of the handling system: a fixed plate 20, suitably placed, in relation to a machine not shown, on stands 21 (only one of these is visible in Fig. 4) on which plate are mounted the three pairs of supporting means 5,5' - 6,6' - 7,7' and a first mobile plate 22 mounted at the summit of four columns 23 (two only of which are visible in Fig. 4) passing through the fixed plate 20 and fixed below to a second mobile plate 24; four supports 25 for two bars 26 extending between two sides 27 connecting the two plates 1, 2 (plate 1 is omitted in Fig. 4 otherwise it would impede a view of the parts comprised between plates 1, 2); a first pneumatic cylinder 28 is fixed onto the first mobile plate 22, it has one end of rod 29 articulated on the left side 27 and is connected to a source of compressed air (not shown) conventionally controlled and driven so as to cause the frame composed of parts 27, 1, 2 with its bars 26, to slide within the holes of supports 25 and bring saddles 3, 4 to the positions already indicated in the description relating to Fig. 1; a second pneumatic cylinder 30 is fixed below the fixed plate 20, it has one end of rod 31 articulated onto the second mobile plate 24 and is connected to a source of compressed air (not shown) conventionally controlled and driven so as to cause the mobile plate 22 to move upwards or downwards bringing saddles 3, 4 of plates 1, 2 to the positions in relation to the supporting means 5,5' -6, 6' -7, 7' already described in connection with Fig. 1.

Fig. 4 shows that the first mobile plate 22 can be raised by a distance z.

In the following claims we will conventionally use the words - lateral - and - transfersal - to describe the movements made by the parts in directions x and z respectively.

Claims

1. Handling system for pieces to be operated in a machine comprising a linear actuator (T) suitable for moving a workpiece (O) from one station (ST/1), at which the piece is loaded, to a machining station (ST/2) and for discharging the operated piece (O) characterized in that it comprises a linear actuator (T) having two seats (3, 4) for simultaneously moving two pieces, supporting means (5,5' - 6,6' - 7,7') for sustaining the pieces (O) when these latter are disengaged from the linear actuator (T), a means (R) designed for introducing a workpiece in a machine (M) executing an operational sequence and for withdrawing the operated piece (O) from said machine, the above linear actuator being associated to movers (28, 30) that impart to it alternating lateral and transversal movements (x, z) in two directions, one perpendicular to the other, in relation to the supporting means(5,5' - 6,6' - 7,7') and to the machine (M), so that the linear actuator (T) picks up from its own first seat (3) a first workpiece (O') placed on a first supporting means (5,5'), carries the first workpiece (O') in front of a machining station(ST/L), disengages the first workpiece (O') from its own first seat (3) and places it on a second supporting means (6,6') from which the first workpiece (O') is introduced into and withdrawn from the machine (M), while a second workpiece (O") reaches the first supporting means (5,5') returns to an initial position where its first seat (3) lies directly below the second workpiece (O") placed on the first supporting means (5,5') and its own second seat (4) lies directly below the operated piece placed on the second supporting means (6,6'), takes up the second workpiece (O") onto its own first seat (3), and the operated piece (O') onto its own second seat (4), carries the second workpiece (O") in front of the machining station (ST/L), disengages the first operated piece (O') from its own second seat (4) and places it on a third supporting means (7,7') from which it is discharged, and disengages the second workpiece

(O") from its first seat (3) and places it on the second supporting means (6,6') from which the second workpiece (O") is introduced into and withdrawn from the machine (M), while a third workpiece (O'") arrives at the first supporting means (5,5'), returns to the initial position where its own first seat (3) lies directly below the third workpiece (O'")placed on the first supporting means (5,5') and its own second seat (4) lies directly below the second workpiece (O") placed on the second supporting means (6,6'), repeats the sequences already described until the handling system is stopped either by an operator or by a conventional device which stops the handling system when the last piece out of a quantity of pieces has been operated and discharged from the handling system.

2. Handling system according to claim 1 characterized in that it comprises a first mover (28) designed to give lateral movements to the linear actuator (T), fixed to a first mobile base (22) transversally carrying the linear actuator (T) in a sliding movement, and in that it comprises a second mover (30) fixed to a fixed base (20) able to impart the transversal movements to the mobile base (22).

3. Handling system according to claims 1 and 2 characterized in that the linear actuator (T) comprises two means (1, 2) parallel one to another and to the direction of the lateral movement, set at a distance and carrying above them two pairs of saddles (3, 4) forming the above two seats (3, 4) each one suitable for holding a piece (O) in a stable manner; it comprises two sides (27) which connect the corresponding lateral ends of the above two means (1, 2); it comprises two bars (26), parallel one to another and to the direction of the lateral movement of the linear actuator, whose ends are fixed to the said sides (27); it comprises supports (25, 25')fixed to the above first mobile base (22) within which the above two bars (26) slide when the first mover (28) imparts lateral movements (x) to the linear actuator (T).

4. Handling system according to claims 1, 2 and 3 characterized in that the above first transversally mobile base (22) is connected to a second transversally mobile base (24) fixed to the first base (22) by means of connecting means (23) which pass through the fixed base (20).

5. Handling system according to the preceding claims characterized in that the first mover (28) is a pneumatic cylinder one end of whose rod (29) is articulated onto one of the above sides (27) and can make a stroke (x) equal to the above lateral movement (x) of the linear actuator (T) and characterized in that the second mover (30) is a pneumatic cylinder, fixed to the fixed base (20), one end of whose rod (31) is articulated onto the second mobile base (24) transversally and can make a stroke (z) equal to the above transversal movement (z) of the linear actuator (T).

-1/3-

Fig. 1

0146763

○ WORKPIECE

◐ WORKPIECE IS ARRIVING

◒ OPERATED PIECE

◒ OPERATED PIECE IS DISCHARGED

START OF CYCLE

PHASE 1

PHASE 2

PHASE 3

PHASE 4

PHASE 5

PHASE 6

PHASE 7

PHASE 8

0146763

Fig. 2

O'

5'  5

2  1

27  T

Fig. 3

C

F4

M

ST/L

F2

ST/2

ST/3

F3

ST/1

F1

R

B

_Fig. 4_

_Fig. 5_